# EUROPEAN PATENT SPECIFICATION

(11) **EP 2 477 776 B1**
(45) Date of publication and mention of the grant of the patent: **31.07.2013**
(21) Application number: 11713889.1
(22) Date of filing: 14.03.2011
(51) Int. Cl.: B23D 45/10, B23D 59/00, B27B 5/06

(54) **OPERATING METHOD FOR THE ALIGNMENT BETWEEN A CUTTING BLADE ANDA SCORING BLADE OF A CUTTING MACHINE**
BETRIEBSVERFAHREN ZUR AUSRICHTUNG ZWISCHEN EINEM SÄGEBLATT UND EINEM VORRITZBLATT EINER SCHNEIDEMASCHINE
PROCÉDÉ D'ACTIONNEMENT POUR L'ORIENTATION ENTRE UNE LAME DE COUPE ET UNE LAME A INCISER DE D'UNE MACHINE DE COUPE

(30) Priority: 18.03.2010 IT BO20100172
(43) Date of publication of application: 25.07.2012
(73) Proprietor: Naldi, Valter, 40137 Bologna (IT)
(72) Inventor: Naldi, Valter, 40137 Bologna (IT)
(86) International application number: PCT/IT2011/000072
(87) International publication number: WO 2011/114364

(56) References cited:
- WO-A1-2008/135066
- DE-A1- 19 520 108

## Description

### TECHNICAL FIELD

Present invention relates to an operating method for the management of a cutting machine for panels or similar.

In particular, present invention relates to a method for the management and the correct alignment between a circular blade, or cutting blade, and its relevant scoring blade, also called scorer, both used in a cutting unit of a cutting machine for panels or other materials that require the use of a similar cutting unit.

As is known, panels for the furniture construction (but also acrylic or aluminum sheets and/or other types of materials) are produced in large dimensions that will be cut and squared to size later according to the needs, in order to obtain various furniture components such as sides, doors, backs, shelves, etc..

The method object of the present invention aims to align a set of blades to be mounted on the machine (cutting and scoring blades) avoiding the problems of existing systems that use complicated measuring devices for both blades, or time consuming adjustments to be carried out every time at least one of the blades mounted on the machine is replaced.

In the field of machining wood based panels, or similar, it is common the use of cutting machines provided with a frame, with a panel handling device to feed the same panels towards a cutting station, and with a cutting unit, carried by a saw carriage, able to carry out transversal cuts on the stack of panels.

The cutting unit includes a circular cutting blade able to cut the entire thickness of the panel or the stack of panels, and a scoring blade also of circular shape, but with a much smaller diameter than the cutting blade. Both blades protrude from a longitudinal gap on an horizontal base, part of a frame where panels or stacks of panels to be cut are positioned. On certain panel sizing saws, the stack of panels is clamped by pressing means onto machine working table during cutting.

Normally the scoring blade, during the feeding of the saw carriage towards the stack of panels on certain machines, or in the feeding of the panels towards the fixed cutting unit on other machines, always precedes the cutting blade in order to score the lower surface of the stack of panels. Moreover, while the cutting blade is generally fixed, the scoring blade (that can be, as we will see, of the following types: single blade trapezoidal shape tooth, single blade straight shape tooth, or double blade type with straight shape tooth) is provided with two, or three, adjustments, manual or motorized, of known type, in order to be adjusted laterally, vertically and, in certain cases, also in its thickness, and therefore to be aligned with the cutting blade so that during cutting no chipping is produced on the underside of the panel.

The execution of a score on the bottom surface of the panel stack, is mainly necessary for special surface coated panels in order to allow the cutting blade to exit from the bottom panel surface directly in contact with the machine table without chipping on both cut edges.

The scoring blade normally rotates in opposite direction to main cutting blade and generally penetrates a couple of millimetres into bottom panel.

However, a problem on similar cutting units, is constituted by the alignment of the cutting blade with the scoring one. In fact, in order to obtain the desired effect, the cut produced by the cutting blade must be inside the score produced by the scoring blade on bottom surface of panels or stack of panels, and moreover that same cut must be perfectly centred with respect to the score. Moreover for a good and unanimously recognized cutting quality, the scoring blade score width should be only a very little bit larger than the thickness of the cutting blade so that the difference between the score and the cutting blade widths could nearly not be detected.

### BACKGROUND ART

Normally the alignment between the cutting and the scoring blades is carried out manually by the operator by executing some test cuts. It is therefore very time consuming since this operation has to be executed every time one of the blades or the complete set of blades has to be changed (the cutting blade and the scoring one).

At the moment on certain machines, to help the aligning adjustment, the saw blade set (cutting blade with relevant scoring blade) is always kept together even after the various necessary sharpenings to obviate the normal wear of the tools.

In accordance with this method, a first manual alignment on machine of the set of saw blades and then the memorization of its position is carried out in order to recall the same alignment position when the set of blades have to be mounted again on machine after sharpening.

However, this solution has the disadvantage that it forces the operator always to replace the complete set of blades even if, for example, the scoring saw is still sharp and does not need to be replaced. It is obvious that in these cases the management of the set of blades as made so far, is not suitable for those machines that use a large variety of materials and do not constantly use the scoring saw for the various cut to size operations.

In patent application EP 1 074 326 and patent EP-B1- 1 815 931 it is suggested that one perform the automatic alignment of the saw blades on the basis of some characterizing parameters ( such as, for example, the tooth thickness, the misalignment between the tooth and the saw blade body, etc.) that are previously memorized in the numeric control of the panel sizing saw. However this entails the previous and difficult measurement of the dimensional characteristics of the tools by means of sophisticated measuring instruments, mostly not available to the vast quantity of panel sizing machine users.

In patents EP-B1- 1 066 906 e DE-B4- 1 952 0108 a similar solution is suggested in which the sophisticated measurement instruments (laser, led, cameras etc.), for the lengthy measurement of tooling every time they are replaced, are positioned on the machine itself, slowing down machine cycle and making the same machine very expensive and complicated, hardly affordable to a lot of possible users.

Moreover in patent application WO2008/135066 A1 an aligning method between a cutting.blade and a scoring blade is disclosed. This method is using a comparison system, preferably optical, between the respective scores made by the cutting blade and scoring blade in successive steps and in different positions on the bottom surface of a test panel. A the end of the first comparison procedure, relative movements between blades are instructed in a way to obtain a presumed alignment of the same blades. A repeated groove test comparison, preferably optical, will determine the correctness of the alignment. In case a misalignment between blades is still present, new adjustments are made up to when, after few attempts, a satisfactory alignment is obtained. However, these operations have to be carried out every time a cutting blade and/or a scoring blade is replaced. All this, evidently, it is very time consuming and means a considerable long machine inactivity every time blades have to be replaced.

### DISCLOSURE OF THE INVENTION

The operating method object of the present invention aims to manage and elaborate the information determined by the various manual alignments already carried out between the same tools. The main object of the present method is therefore that of automatically aligning any cutting blade with any scoring blade as long as they have been at least once mounted on the machine and aligned even if not directly with each other.

Therefore, present invention refers to an operating method in accordance to what is claimed in the independent enclosed claim, and preferably, in any one of the directly or indirectly depending claims.

### BRIEF DESCRIPTION OF THE DRAWINGS

For a better understanding of the present invention a description of some preferred actuating embodiments will now be executed with reference to the following enclosed drawings:
- figure 1 shows a lateral view of a saw carriage comprehensive of a scoring blade and of a cutting blade in working position on a panel laid on the machine table;
- figure 2 shows schematically the different typologies of scoring blades and relative cutting blades in working position on the machine table;
- figure 3 shows a plan view of the saw carriage of figure 1;
- figure 4A represents a first configuration of a single trapezoidal shaped tooth scoring blade;
- figure 4B shows a second configuration of a single trapezoidal shaped tooth scoring blade;
- figure 5A represents a first configuration of a cutting blade;
- figure 5B represents a second configuration of a cutting blade; and
- figure 6 shows a double blade straight tooth scoring unit.

### PREFERRED EMBODIMENTS OF THE INVENTION

Number 10, in enclosed figures, indicates as a whole a cutting unit of a cutting machine (not shown as a whole).

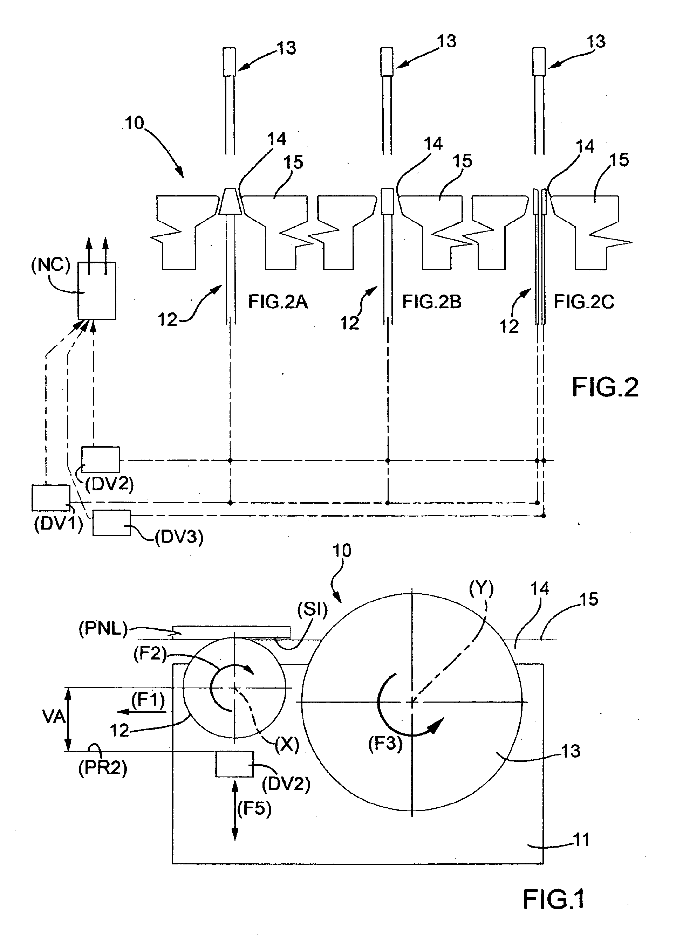

Cutting unit 10, in turn, comprises a saw carriage 11 (figure 1), that, during cutting, is moved according to an arrow (F1), but in certain machines is fixed and it is the panel (PNL) that is moved opposite to arrow (F1), onto which is mounted a scoring blade 12 (that, in use, rotates around an axis (X) according to an arrow (F2)), followed by a cutting blade 13 (in use rotating around an axis (Y) according to an arrow (F3)). As is known, scoring blade 12 and cutting blade 13 preferably rotate in opposite direction by means of known devices and not shown.

Scoring blade 12 and cutting blade 13 both protrude from a gap 14 made on work table 15 of cutting machine. Work table 15 supports at least one panel (PNL) to be cut (figure 1) eventually positioned on work table 15 by a pushing unit (not shown).

As is known, the object of scoring blade 12 is that of making a score (SI) on bottom surface of panel (PNL), a score (SI) that must be perfectly aligned to cutting blade 13 during effective cutting of panel (PNL).

Moreover cutting unit 10 comprises the following devices (figure 2):
(1) an electronic unit (NC) to command and control various machine functions;
(2) a first driving device (DV1) by means of which it is possible to carry out first lateral and horizontal movements of scoring blades;
(3) a second driving device (DV2) by means of which it is possible to carry out vertical movements of scoring blades; and
(4) a third driving device (DV3) by means of which it is possible to adjust the thickness of special straight tooth mechanically connected double blade scoring units.

In particular, in figure 2A a single blade trapezoidal tooth scorer is shown, in figure 2B a single blade straight tooth scorer is shown, while in figure 2C a double blade straight tooth scorer is shown.

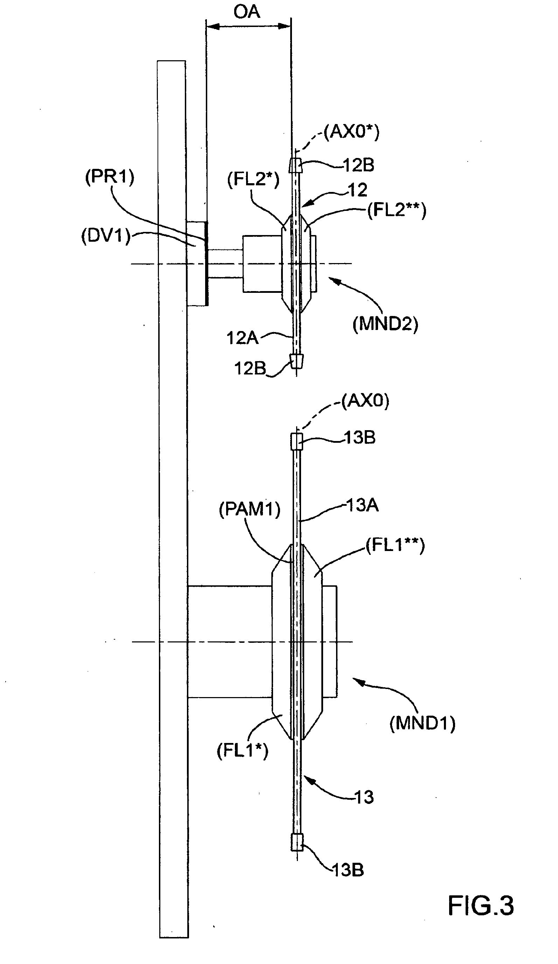

As usual, only scoring blade 12 could be laterally or vertically moved, while for cutting blade 13 generally no adjustment is foreseen. The same blade is fixed to saw carriage 11 by means of its relative arbor (MND1) (figure 3) with its saw body resting on a respective flange (FL1*). Over and above its body 13A, cutting blade 13 includes a series of teeth 13B.

Cutting blade 13 is clamped on relative arbor (MND1) by means of a further clamping flange (FL1**).

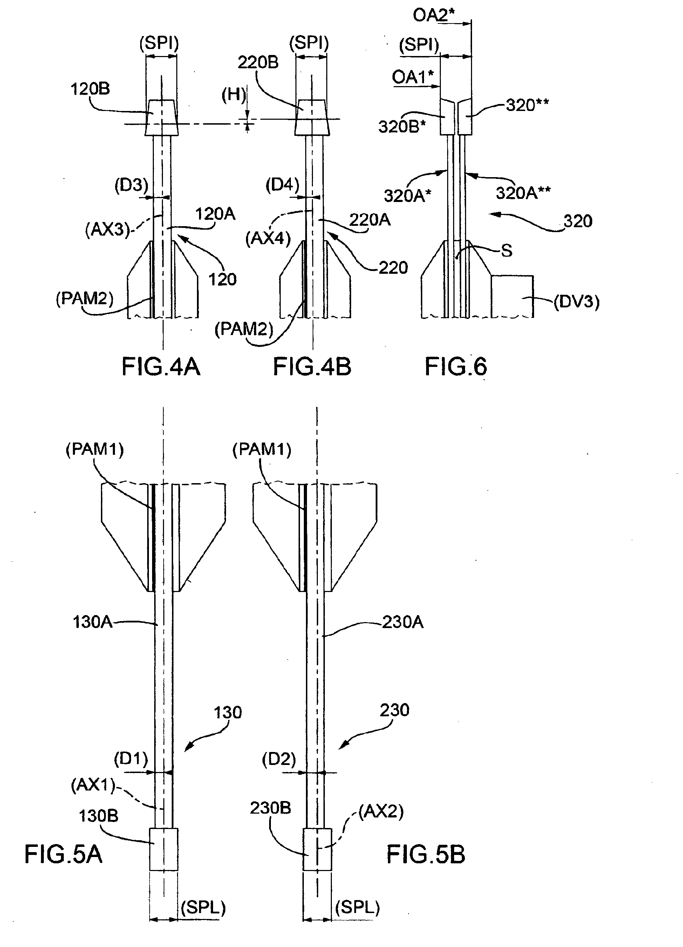

Scoring blade 12 is fixed in a similar manner on a relative arbor (MND2) (figure 3) that, instead of being fixed, is provided with an horizontal adjustment, by means of first driving device (DV1), and with a vertical adjustment, by means of second driving device (DV2) (figure 1), over and above a possible third adjustment, by means of third driving device (DV3) to adjust the thickness of a double blade scoring unit (figure 6).

Scoring blade 12 includes, in turn, a scoring blade body 12A and a series of teeth 12B. The body 12A is clamped between a relative resting flange (FL2*) and a relative clamping flange (FL2**).

The adjustments carried out on scoring blade 12 are needed, on one side, to position teeth 12B of same scoring blade 12, and therefore its relevant score (SI), perfectly aligned with respect to teeth 13B of cutting blade 13, and, on the other side, to produce a score (SI) having a width adapted in relation to any cutting blade 13 thickness.

In present context we assume that the tooth thickness coincides exactly with the cutting width even if, in certain cases, this is not true. In fact cutting blades due to the their bodies oscillation during rotation, could produce a slightly larger cutting width; in any case, the method herewith described, being able to be based on a model with blades in rotation, is not affected by this detail.

As explained the score width (SI) must necessarily be slightly larger than the cutting width to avoid chipping on lower panel (PNL) surface.

Generally, an optimum adjustment is executed by making a score (SI) approximately 0,1 mm larger (0,05 on each side) with respect to cutting width.

In present context, with the term "manual alignment" an operation carried out directly by a specialized machine operator able to manually adjust the respective position of blades using essentially his visual judgment and experience as a function of the working needs is intended.

As shown in figures 5A, 5B, different cutting blades 130, 230 have generally a different position of teeth 130B, respectively 230B, with respect to relative bodies 130A, 230A.

The result is that, appropriately, scoring blade 12 (figure 3) must move laterally to follow the effective position of teeth 130B, 230B, of cutting blade 130, respectively, 230.

In fact, if we mount two different cutting blades 130, 230 (figure 5A, 5B) with teeth 130B, respectively, 230B with same thickness (SPL), we will notice that we would need to move laterally (towards right or left) the same scoring blade 12 in order to align it to the different position of teeth 130B, respectively, 230B.

In particular, if with the same scoring blade 12, after being aligned to a first cutting blade 130, we need to move laterally arbor (MND2) with respect to a reference plane (PR1) (figure 3), for example by 0,1 mm towards right to align the same scoring blade 12 with a second cutting blade 230, it means that teeth 230B of this second cutting blade 230 are positioned 0,1 mm rightward with respect to teeth 130B of first cutting blade 130.

In other words, the distance (D1) of the axes (AX1) of teeth 130B, with respect to a resting plane (PAM1) on arbor (MND1) of saw body 130A, is smaller by 0,1 mm in respect to a distance (D2) between axes (AX2) of teeth 230B and same resting plane (PAM1) (figure 5A, 5B).

Obviously, if we had to move the scoring blade 12 towards left, the above distance (D1) would have been greater by 0,1 mm than distance (D2).

We must note here that also scoring blades 120, 220 (figure 4A, 4B), since they are fixed, by means of relative flanges (FL2*), (FL2**), to relative harbor (MND2) onto saw carriage 11, have same displacement problems of respective teeth 120B, 220B with respect to relative scoring body 120A, 220A.

Therefore, having to align two different scoring blades 120, 220, even if with identical scoring width (SPI) of respective teeth 120B, 220B (figure 4A, 4B), with same cutting blade 13, in general we would need to move arbor (MND2) laterally to recreate aligning condition of teeth 120B, 220B, of both scoring blades 120, 220, with respect to the ones of cutting blade 13.

Therefore if we align scoring blade 120 with cutting blade 13, we replace only scoring blade 120 with scoring blade 220 and we align this second scoring blade 220 with above mentioned cutting blade 13, we would need to move arbor (MND2) laterally, for example, towards right by 0,05 mm. This lateral movement of arbor (MND2) represents, therefore, the difference between a distance (D3) (distance between an axes (AX3) of teeth 120B of first scoring blade 120 with respect to an arbor resting plane (PAM2)) and a distance (D4) relative to scoring blade 220.

In this specific case, since we have moved the arbor (MND2) rightward by 0,05 mm to align second scoring blade 220, (D4) is smaller than (D3) by 0,05 mm.

What has been said so far, is valid for any kind of scoring blade.

In a first typology, scoring blades 120, 220 (figure 2A, 4A, 4B) being used are scoring blades with same base angles isosceles trapezoidal shape.

From a comparison of figures 4A, 4B it can be noted that the same score width (SPI) can be found at different height of teeth 120B, 220B, heights always referred to same reference plane (PR2) (figure 1). In particular, referring to reference plane (PR2), tooth 220B section for same score width (SPI) is at a different height (H), with respect to same score width (SPI) of tooth 120B. This means that teeth 220B have a greater thickness than teeth 120B.

Vertical adjustment of trapezoidal tooth scoring blades 120, 220 is made to recreate perfect coupling condition between the cut width and the score width.

If we have a cut, produced by a cutting blade, that is coupled to a first score obtained by a first scoring blade (at a certain vertical adjustment position (X)), and that is coupled also to a second score, obtained by a second scoring blade, at the vertical adjustment position (X) - 0,25 mm (therefore moving downward scoring arbor by 0,25 mm), we become aware that second scoring blade teeth are surely larger than the ones of first scoring blade and that, in any case, at these two respective values of vertical adjustment, the two score widths coincide perfectly since they are verified with same cutting blade tooth. Therefore, any cutting blade that is coupled to this second scoring blade vertical adjustment value (Y) will be coupled with first scoring blade at vertical adjustment value (Y) + 0,25 mm (therefore moving scoring blade arbor upward by 0,25 mm).

In present context the "first aligning positions" of cutting and scoring blades are defined by all those values that allow for a unique characterization of tooling, and that can be determined directly preferably, but not necessarily, by the manual alignments (horizontal or horizontal and vertical) between cutting and scoring blades by means of the readings (horizontal or horizontal and vertical) of the aligned scoring blade position values.

Moreover, the "second aligning positions", of cutting and scoring blades never previously aligned together, are determined, directly or indirectly, by means of comparison calculations between previously mentioned values referred to said "first aligning positions".

Moreover, as "characterizing data" of cutting and scoring blades, all those characterizing data relative to cutting and/or scoring blades that are known or measurable with known measuring means, such as for example, the tooth typology (trapezoidal, straight tooth or double blade type), the tooth angle of a trapezoidal scoring blade, etc.. Incidentally it has to be said that all previous characterizing data together could not be sufficient to allow for an automatic alignment between cutting and scoring blades.

In other words, the operating method object of present invention includes the following steps:
(s1) determining first aligning positions between (n) cutting blades and (N) scoring blades;
(s2) memorizing said first aligning positions;
(s3) determining, by means of calculations and as a function of said first aligning positions, at least a second aligning position between one of the (n) cutting blades and one of the (N) scoring blades never previously aligned together; and
(s4) instructing and executing said at least one second alignment between a one of the (n) cutting blades and one of the (N) scoring blades in accord with previous step (s3).

Eventually also second aligning positions are memorized in order to avoid repeating same calculations.

In present description we will use following initials:
OA = horizontal alignment; it is defined as the distance between (PAM2) and (PR1) for which the score (SI) produced on the underside of the panel (PNL) is perfectly centered with respect to the cut executed by the teeth 13B, 130B, 230B, respectively, of cutting blades 13, 130, 230; therefore in this position axes (AX0*), (AX3), (AX4), respectively, of teeth 12B, 120B, 220B, of scoring blades 12, 120, 220 are therefore perfectly aligned with axes (AX0), (AX1), (AX2), respectively, of teeth 13B, 130B, 230B of cutting blades 13, 130, 230; and
VA = vertical alignment; with scoring blades 12, 120, 220 having trapezoidal teeth. 12B, 120B, 220B, it is defined as the distance between reference plane (PR2) (figure 1) and rotation axes (X) of scoring blades 12, 120, 220 for which an optimum score width (SI) on panel (PNL) is obtained in relation to the cut according to the operator judgment.

Conventionally we consider negative values for left hand movements in accordance to our drawing and positive values for right hand movements in regards to horizontal alignment and positive for upward movements and negative for downward movements in regards to vertical alignment.

But let us now look at a practical example.

We align, for example manually, cutting blade 13 with scoring blade 12. For this set of blades we determine the following aligning positions:
OA1 = 100,0 e VA1= 100,0

We now set cutting blade 13 with scoring blade 120, we align them, again for example manually, determining the following values:
OA2 = 99,93 e VA2 = 100,12

We now set cutting blade 13 with scoring blade 220, we align them determining the following values:
OA3 = 100,22 e VA3 = 99,85

We now set cutting blade 130 with scoring blade 220, we align them determining the following values:
OA4 = 99,88 e VA4 = 99,76

We now set cutting blade 230 with scoring blade 220, we manually align them determining the following values:
OA5 = 100,14 e VA5 = 99,66

As we can see we have mounted and aligned on the machine at least once all three cutting blades 13, 130, 230 and all three scoring blades 12, 120, 220.

Imagine now that we need to mount on the machine cutting blade 230 and scoring blade 12 that have never been directly aligned together.

We proceed to verify the difference in the aligning position between scoring blade 220 and scoring blade 12 when the same were aligned with a common cutting blade, for example cutting blade 13.

Considering previous aligning values OA1 and OA3 the difference is - 22 mm; therefore (DV1) will have to move arbor (MND2) sideways by - 22 mm (left hand in our drawing) to switch from scoring blade 220 position to scoring blade 12 position horizontal wise.

For the vertical positioning we have a difference between values VA1 and VA3 of + 0,15 mm; therefore (DV2) will have to move arbor (MND2) vertically upward to switch from scoring blade 220 to scoring blade 12 position.

Starting now from horizontal alignment OA5 and from vertical alignment VA5 (cutting blade 230 and scoring blade 220) we now calculate new aligning positions considering the two corrections relative to the above calculated differences between scoring blade 220 and scoring blade 12.

In this case OA6 = 100,14 - 0,22 = 99,92 that represents, therefore, the horizontal aligning position of scoring blade 12, referred to reference plane (PR1), in order to be aligned laterally with cutting blade 230.

We calculate then:
VA6 = 99,66 + 0,15 = 99,81, that represents, therefore, the vertical aligning position of scoring blade 12, referred to reference plane (PR2), in order to produce a score (SI) with suitable width to comply with thickness of cutting blade 230.

When we speak about instructing the positioning, we mean a motorized movement, but also, eventually, a manual positioning with direct position readout that could be visualized by means of a mechanical counter or an electronic display connected to the horizontal and vertical adjustment mechanical movement. In this way this method could be made available also to machines not provided with sophisticated drives, giving to operator a visual or written instruction on alignment positioning to be carried out.

If we wanted to align cutting blade 130 with scoring blade 120, we would still proceed with the same method starting from the aligning position of cutting blade 130 with scoring blade 220, and correcting the scoring blade 220 position in regards to difference between aligning position of scoring blade 220 and scoring blade 120 verified with same cutting blade 13.

The above considerations are referred, obviously, to scoring blades 12, 120, 220 having teeth 12B, 120B, 220B with isosceles trapezoidal and similar geometric shape (same base tooth angle).

Therefore, in case scoring blades 12, 120, 220 with isosceles trapezoidal tooth shape 12B, 120B, 220B but with different base angles are being used, it will be sufficient to make a simple geometrical calculation to verify the height difference corresponding to the different base angle: (H (height difference of second scoring blade with different base angle) = h (height difference for same base angle scoring blade) * Tg Y (first scoring blade angle) / Tg a (second scoring blade angle). In accordance with this management procedure, to each trapezoidal scoring blade, if necessary, also its relevant tooth base angle (characterizing data, known from manufacturer specification or manually determined) is assigned.

In case straight tooth scoring blades (figure 2B) are used, where their thickness is necessarily matched with the tooth thickness of cutting blade, such as, for example, 0,1 mm larger than cutting blade tooth thickness, the same considerations as previously mentioned are valid, even if, in this case, the only factor to be considered in the management of the tooling and their alignment, is the horizontal alignment as previously described. As far as the score (SI) depth, it is obvious that, since the teeth are straight, a variation of their penetration into the panel (PNL) would not change the score width.

In certain cases it would be beneficial to manage the score (SI) depth at operator's discretion by means of the input in the electronic control (NC) of one or more predetermined depth values, from which to choose. In fact, with certain materials and with the use of straight tooth scoring blades, it could be necessary to manage this data of the depth too, so as to make less visible, and therefore less evident in the following panel edging operation, the small step that is created on panel (PNL) edge in correspondence to the score that avoids cutting blade chipping.

We now analyze the alignment of a cutting blade 13 with its relevant scoring blade 320 with straight tooth and double blade mechanically coupled between each other (figure 6). In this case it is possible to manage the horizontal position of both scoring blades 320A*, 320A** through the two independent movements and/or motorizations. In fact with (DV1) it is possible to manage the lateral position of scoring blade 320A*, while with (DV3) it is possible to manage the position relative to second scoring blade 320A** with respect to first one (figure 2C and 6).

In reality it would be possible to manage either the single positioning of each scoring blade 320A*, 320A** as absolute values in respect to a common reference plane, or in respect to two distinct reference planes, and the positioning of only one of the scoring blades, always referred to the reference plane, and the total thickness (SPI) of the score produced by both scoring blades together.

We will analyze now, also for this case, a practical example

As we said we align, for example manually, cutting blade 13 with scoring blade 320.

For this set of blades, for example, always referring to reference plane (PR1) we determine following aligning position values:
OA1 * = 110,70 e OA2* = 115,0 (or we could also say OA1*= 110,70 and (SPI) = 4,30), where OA1 * is the horizontal alignment, referred to a reference plane (PR1) of first blade 320A* with respect to left side of tooth 13B of cutting blade 13, and OA2* is the horizontal alignment, always referred to reference plane (PR1), of second blade 320A** in respect to right side of tooth 13B of cutting blade 13. (SPI), as usual, is the score width, determined, in this case, by the position of second scoring blade 320A** in respect to first scoring blade 320A*.

We now mount cutting blade 130 and scoring blade 320; we align, again for example manually and determine:
OA11* = 110,80 e OA21* = 114,98

We now mount cutting blade 13 and a new scoring blade 420; we align and determine:
OA12* = 110,50 e OA22* = 114,80

Now if we would like to leave on machine scoring blade 420 and replace cutting blade 13 with cutting blade 130, the calculation for the new alignment is the following.

At first we calculate the relative movement between the left blade of scoring blade 420 and the left blade of scoring blade 320 in reference to same cutting blade 13 (OA12* e OA1*); this difference is equal to - 0,2 mm. Consequently, left blade of scoring blade 420 is positioned left wards by 0,2 mm with respect to scoring blade 320 same blade. Obviously also the positioning of second blade of scoring blade 420 is affected by the same positioning difference. Having said this, we will subtract 0,2 mm from both positioning referred to alignment between cutting blade 130 and scoring blade 320 to determine new alignment between cutting blade 130 and scoring blade 420:
OA13* = 110,80 - 0,2 = 110,60; OA23* = 114,98 - 0,2 = 114,78.

As far as vertical positioning is concerned for this scoring blade typology, same considerations made previously for the single straight tooth scoring blade of figure 2B are valid.

We have to note here that certain double blade scoring units (figure 2C, 6) have only an horizontal adjustment (DV2) for scoring blade 320A* resting on flange (FL2*). The adjustment of second blade 320A** to determine the overall thickness (SPI) is therefore determined by a calibrated spacer (S) (figure 6) placed in between the two scoring blades.

In this case the method previously described will be used only for the automatic positioning of scoring blade 320A*, while, as far as the scoring blade 320A** positioning is concerned, it has to be carried out manually first, with calibrated spacers (S) as a function of cutting blade thickness (SPL) manually measured with known devices and that determine therefore scoring blade 320 overall thickness (SPI). In practice the same aligning conditions typical of straight tooth scoring blade of figure 2B are recreated.

Each tool to be mounted on machine will have a recognition number and the operator inserts the number (or the code) of cutting or scoring blade that he is going to use. However, in known manner, each tool could have a relative chip or bar code for automatic recognition by the management system.

In case the electronic unit recognizes that the cutting blade or the scoring blade to be mounted on machine has never been previously used and/or aligned, it will consequently inform the operator so that he can proceed for a new alignment and to its relative recording for future alignment calculation. There will be therefore a memory for the tools where the aligning positions are automatically stored, eventually together with the characterizing data of scoring blades, such as, for example, trapezoidal tooth, tooth angle, straight tooth, double blade scoring unit, etc..

Time to time, it is then possible to make a small correction to a specific alignment between cutting blade and scoring blade and to re-memorize its new alignment when, after a few sharpenings, the tooth thickness will be reduced by few hundreds of millimeters.

It would also be possible to consider in calculations an average tooth thickness reduction for each single tool due to each sharpening. For example it would be possible to suppose that at each tool replacement its sharpening is carried out. If we assign to each sharpening an average tooth thickness reduction (both for the cutting and scoring blade), and eventually also an average diameter reduction for the scoring blade, we could have an automatic calculation of future alignments without any further intervention needed. On the other hand, it would also be possible after first cutting and/or scoring blade sharpening to execute again an alignment with a respective known tool, so as to cause the electronic unit to self-learn the thickness difference after the executed sharpening. This value will be then automatically considered in the calculation for the successive alignments.

Generally, adjustments of scoring blade arbor are executed by means of small precision gear boxes and/or endless screw mechanisms with automatic recovery of play of known type, with visual mechanical display of positioning or, more recently, by means of an encoder and an electronic display. Its motorization is generally executed with servo motor with incorporated encoders. In all cases it is possible to memorize the scoring blade position either recording (manually) the positioning of the mechanical display and recording via a predisposed software the electronic solution. The memorization or recording of positioning could also be possible in absolute mode, that means that all movements are always referred to a zero position. In particular, in electronic systems of known type, it is possible to carry out a zeroing operation at a predetermined position to which all future movements are always referred.

To demonstrate the undisputable advantages of the method object of present invention, we will now make an example considering a panel saw tool kit made of 5 cutting blades and 5 scoring blades.

In this case we could proceed as follows:
- we align, for example manually, cutting blade 1 with scoring blade 10, cutting blade 1 with scoring blade 20, cutting blade 1 with scoring blade 30, cutting blade 1 with scoring blade 40, cutting blade 1 with scoring blade 50.
- we continue then aligning the other cutting blades with the same scoring blade and therefore, cutting blade 2 with scoring blade 50, cutting blade 3 with scoring blade 50, cutting blade 4 with scoring blade 50, cutting blade 5 with scoring blade 50; or, as alternative, we could align the other cutting blades with any one of the scoring blade already aligned, for example: cutting blade 2 with scoring blade 20, cutting blade 3 with scoring blade 30, cutting blade 4 with scoring blade 40, cutting blade 5 with scoring blade 50.

It is therefore possible to verify that in both cases we have executed a total of 9 alignments (first aligning positions) that will allow us to have available a total of 25 usable alignments, since, by means of the above mentioned calculations, we can come up with the aligning positions of all tools and therefore carry out new automatic alignments never made before (second aligning positions).

If someone does not want to execute beforehand all alignments between cutting blades and scoring blades of the tool kit, it is possible to proceed in the following manner:
- after having aligned cutting blade 1 with scoring blade 10, we could then continue alternating the tools, such as, cutting blade 2 and same scoring blade 10, same cutting blade 2 and scoring blade 20, cutting blade 3 and same scoring blade 20, same cutting blade 3 and scoring blade 30, cutting blade 4 and same scoring blade 30, same cutting blade 4 and scoring blade 40, cutting blade 5 and same scoring blade 40, same cutting blade 5 and scoring blade 50.

Also in this case we have executed 9 alignments that allow for all 25 possible combinations.

The only difference with respect to the previous example, is that the electronic control will have to execute extra calculations. For example, if we have to mount on machine cutting blade 4 with scoring blade 10 (never previously aligned together), at first we have to calculate the difference between cutting blade 4 and cutting blade 3 with the common scoring blade 30 (following the method and calculation previously described), and then calculate the difference between cutting blade 3 and cutting blade 2 with the common scoring blade 20, arriving therefore at the total difference between cutting blade 2 and cutting blade 4. It is then the case to apply this difference to the alignment between cutting blade 2 with scoring blade 10, to arrive at the aligning position value/s of cutting blade 4 with scoring blade 10.

It is therefore evident that exclusively using the first aligning position values of scoring blades with respective cutting blades, it is possible, by means of direct and/or indirect comparison, to come up with new second aligning position values of the various tools.

As it is clear from this analysis, it would then be necessary to align a new scoring blade with an old cutting blade already aligned or a new cutting blade with an old scoring blade already aligned a first single time to avoid then all successive future manual alignments.

If the thickness reduction for each sharpening (both for the cutting and the scoring blades) is then taken into account in the calculation, the first manual alignment would be definitive for the whole single tool life.

From these examples it is clear that the minimum necessary number of alignments is given by the sum of the number of the cutting blades and the number of the scoring blades less 1 (that is the first common alignment between cutting blade and scoring blade) that constitute the machine tool kit.

In fact, in the hypothetical panel sizing machine tool kit composed of 10 cutting blades and 10 scoring blades, according to present management and calculation method, it would be necessary to carry out only 19 alignments instead of the initial 100 to have the possibility to combine afterwards all available cutting blades with all available scoring blades, aligning them in an automatic mode.

With the automatic sharpening tooth thickness correction, considering that a cutting or scoring blade could be sharpened approximately 15 times, we have a total combination of (150 x 150) = 22500 total alignments as opposed to the only 19 initial manual alignments executed in accordance to the present method.

The main advantage of present invention is constituted by the fact that it is possible to determine the characterizing values of cutting blades and scoring blades by means of their alignment and that the particular use of said characterizing values allows for the automatic alignment between the various tools without proceeding every time to the execution of a new alignment.

## Claims

1. Operating method for the management and for the correct alignment of a cutting unit of a cutting machine, for the automatic alignment of a cutting blade (13; 130; 230) and its relevant scoring blade (12; 120; 220; 320) of a plurality of cutting blades (13; 130; 230) and a plurality of scoring blades (12; 120; 220; 320) as long as each of them have been at least once mounted on the machine and aligned even if not directly with each other wherein the method comprises the following steps:
(s1) identifying manually or automatically the cutting blade (13; 130; 230) and its relevant scoring blade (12; 120; 220; 320) to be mounted on the machine;
(s2) determining first aligning positions between a plurality of cutting blades (13; 130; 230) and a plurality of scoring blades (12; 120; 220; 320);
(s3) memorizing said first aligning positions;
(s4) determining by means of comparison calculations, as a function of said first aligning positions, at least a second aligning position between one of the plurality of cutting blades (13; 130; 230) and one of the plurality of scoring blades (12; 120; 220; 320) never previously aligned together; and
(s5) instructing and executing said at least one second alignment between one of the plurality of cutting blades (13; 130; 230) and one of the plurality of scoring blades (12; 120; 220; 320), as per previous step (s4).

2. Operating method, as claimed in claim 1, **characterized by** the fact that in order to determine said at least one second alignment position as per step (s4) of claim 1, at least one characterizing data regarding said plurality of cutting blades (13; 130; 230) and/or to said plurality of scoring blades (12; 120; 220; 320) is further used.

3. Operating method as claimed in any one of the preceding claims, **characterized by** the input in the electronic unit (NC) of one or more predetermined score (SI) depths when single blade scoring unit with straight tooth or split blade scoring unit (320) are being used.

4. Operating method as claimed in any one of the preceding claims, **characterized in that** it is sufficient to align a new scoring blade (12; 120; 220; 320) a single time with a cutting blade (13; 130; 230) already aligned, or a new cutting blade (13; 130; 230) a single time with a scoring blade (12; 120; 220; 320) already aligned, to execute automatic alignments between all cutting blades (13; 130; 230;) and all scoring blades (12; 120; 220; 320).

5. Operating method as claimed in any one of the preceding claims, **characterized by** the fact that a warning signal is generated, in order to determine first aligning positions for a cutting blade or for a scoring blade in case one of said plurality of cutting blades (13; 130; 230), or one of said plurality of scoring blades (12; 120; 220; 320) to be used on machine has never been previously utilized and/or aligned.

6. Operating method as claimed in any one of the preceding claims, **characterized in that** after sharpening a cutting blade (13; 130; 230) or a scoring blade (12; 120; 220; 320) new first aligning positions for cutting blade (13; 130; 230) or for scoring blade (12; 120; 220; 320) with respective known tools is executed, in order for the system to self-learn the difference in the tooth thickness of the tools and/or in the diameter of the scoring blade after sharpening and in order to account for this/these values in calculations for determining second aligning positions after tool sharpening.

7. Operating method as claimed in any one of the preceding claims 1-5, **characterized by** the fact that it is able to assign an average reduction of the tooth thickness of each single tool and/or of the of the scoring blade diameter for each single sharpening operation and to automatically calculate second aligning positions between one of the plurality of cutting blades (13; 130; 230) and one of the plurality of scoring blades (12; 120; 220; 320) taking into account said average reduction of the tooth thickness of each single tool and/or eventually also of said average reduction of scoring blade diameter.

8. Operating method as claimed in any one of the preceding claims, **characterized by** the fact that it implements automatic and motorized movements for the adjustment of the scoring blade unit.

9. Cutting machine for panels or similar; cutting machine including at least one cutting unit, in turn including at least a cutting blade and a scoring blade; said cutting unit including at least a device to allow the alignment between said cutting blade and said scoring blade; cutting machine being **characterized by** comprising an electronic unit (NC) programmed in such a way to implement the operating aligning method as claimed in any one of the preceding claims 1-8.

## Patentansprüche

1. Betriebsverfahren zur Steuerung und zur korrekten Ausrichtung einer Schneideinheit einer Schneidemaschine, zur automatischen Ausrichtung eines Schneidblatts (13; 130; 230) und seines zugehörigen Vorritzblatts (12; 120; 220; 320) aus einer Vielzahl von Schneidblättern (13; 130; 230) und einer Vielzahl von Vorritzblättern (12; 120; 220; 320), sofern jedes davon mindestens einmal an der Maschine, auch wenn nicht direkt miteinander, angebracht und ausgerichtet war, wobei das Verfahren folgende Schritte umfasst:
(s1) manuelles oder automatisches Identifizieren des Schneidblatts (13; 130; 230) und seines zugehörigen Vorritzblatts (12; 120; 220; 320), die an der Maschine anzubringen sind;
(s2) Bestimmen erster Ausrichtpositionen zwischen einer Vielzahl von Schneidblättern (13; 130; 230) und einer Vielzahl von Vorritzblättern (12; 120; 220; 320);
(s3) Speichern der ersten Ausrichtpositionen;
(s4) Bestimmen, mittels Vergleichsberechnungen in Abhängigkeit von den ersten Ausrichtpositionen, von mindestens einer zweiten Ausrichtposition zwischen einem aus der Vielzahl von Schneidblättern (13; 130; 230) und einem aus der Vielzahl von Vorritzblättern (12; 120; 220; 320), die niemals zuvor miteinander ausgerichtet wurden; und
(s5) Anweisen und Ausführen der mindestens einen zweiten Ausrichtung zwischen einem aus der Vielzahl von Schneidblättern (13; 130; 230) und einem aus der Vielzahl von Vorritzblättern (12; 120; 220; 320) gemäß dem vorhergehenden Schritt (s4).

2. Betriebsverfahren nach Anspruch 1, **dadurch gekennzeichnet, dass**, um die mindestens eine zweite Ausrichtposition gemäß Schritt (s4) aus Anspruch 1 zu bestimmen, ferner mindestens ein Satz kennzeichnende Daten betreffend die Vielzahl von Schneidblättern (13; 130; 230) und/oder die Vielzahl von Vorritzblättern (12; 120; 220; 320) verwendet wird.

3. Betriebsverfahren nach einem beliebigen der vorhergehenden Ansprüche, **gekennzeichnet durch** die Eingabe einer oder mehrerer vorgegebener Vorritztiefen (SI) in die Elektronikeinheit (NC), wenn Einblatt-Vorritzeinheiten mit geraden Zähnen oder Geteiltblatt-Vorritzeinheiten (320) verwendet werden.

4. Betriebsverfahren nach einem beliebigen der vorhergehenden Ansprüche, **dadurch gekennzeichnet, dass** es ausreichend ist, ein neues Vorritzblatt (12; 120; 220; 320) ein einziges Mal mit einem bereits ausgerichteten Schneidblatt (13; 130; 230) auszurichten, oder ein neues Schneidblatt (13; 130; 230) ein einziges Mal mit einem bereits ausgerichteten Vorritzblatt (12; 120; 220; 320) auszurichten, um automatische Ausrichtungen zwischen allen Schneidblättern (13; 130; 230) und allen Vorritzblättern (12; 120; 220; 320) durchzuführen.

5. Betriebsverfahren nach einem beliebigen der vorhergehenden Ansprüche, **dadurch gekennzeichnet, dass** ein Warnsignal erzeugt wird, um erste Ausrichtpositionen für ein Schneidblatt oder für ein Vorritzblatt zu bestimmen, falls eines aus der Vielzahl von Schneidblättern (13; 130; 230) oder eines aus der Vielzahl von Vorritzblättern (12; 120; 220; 320), die an der Maschine zu verwenden sind, niemals zuvor verwendet und/oder ausgerichtet wurde.

6. Betriebsverfahren nach einem beliebigen der vorhergehenden Ansprüche, **dadurch gekennzeichnet, dass** nach dem Schärfen eines Schneldblatts (13; 130; 230) oder eines Vorritzblatts (12; 120; 220; 320) neue erste Ausrichtpositionen für das Schneidblatt (13; 130; 230) oder für das Vorritzblatt (12; 120; 220; 320) mit entsprechenden bekannten Werkzeugen durchgeführt werden, damit das System von selbst den Unterschied der Zahndicke der Werkzeuge und/oder des Durchmessers des Vorritzblatts nach dem Schärfen lernt und damit dieser Wert/diese Werte in Berechnungen zum Bestimmen zweiter Ausrichtpositionen nach dem Werkzeugschärfen Berücksichtigung finden.

7. Betriebsverfahren nach einem beliebigen der vorhergehenden Ansprüche 1-5, **dadurch gekennzeichnet, dass** es vermag, eine durchschnittliche Reduktion der Zahndicke jedes einzelnen Werkzeugs und/oder des Vorritzblattdurchmessers für jeden einzelnen Schärfungsvorgang zuzuweisen und automatisch zweite Ausrichtpositionen zwischen einem aus der Vielzahl von Schneidblättern (13; 130; 230) und einem aus der Vielzahl von Vorritzblättern (12; 120; 220; 320) unter Berücksichtigung der durchschnittlichen Reduktion der Zahndicke jedes einzelnen Werkzeugs und/oder eventuell auch der durchschnittlichen Reduktion des Vorritzblattdurchmessers zu berechnen.

8. Betriebsverfahren nach einem beliebigen der vorhergehenden Ansprüche, **dadurch gekennzeichnet, dass** es automatische und motorisierte Bewegungen für die Einstellung der Vorritzblatteinheit implementiert.

9. Schneidemaschine für Platten oder Ähnlichem; wobei die Schneidemaschine mindestens eine Schneideinheit umfasst, die ihrerseits mindestens ein Schneidblatt und ein Vorritzblatt umfasst; wobei die Schneideinheit mindestens eine Vorrichtung umfasst, um die Ausrichtung zwischen dem Schneidblatt und dem Vorritzblatt zu erlauben; wobei die Schneidemaschine **dadurch gekennzeichnet ist, dass** sie eine Elektronikeinheit (NC) umfasst, die auf eine Weise programmiert ist, dass sie das Ausrichtbetriebsverfahren nach einem beliebigen der vorhergehenden Ansprüche 1-8 implementiert.

## Revendications

1. Procédé d'actionnement pour la gestion et pour l'alignement correct d'une unité de coupe d'une machine de coupe, pour l'alignement automatique d'une lame de coupe (13 ; 130 ; 230) et de sa lame d'incision correspondante (12 ; 120 ; 220 ; 320) parmi une pluralité de lames de coupe (13 ; 130 ; 230) et une pluralité de lames d'incision (12 ; 120 ; 220 ; 320) à condition qu'elles aient été montées au moins une fois sur la machine et alignées l'une avec l'autre même si ce n'est pas directement, dans lequel le procédé comprend les étapes suivantes :
(s1) l'identification manuellement ou automatiquement de la lame de coupe (13 ; 130 ; 230) et de sa lame d'incision correspondante (12 ; 120 ; 220 ; 320) à monter sur la machine ;
(s2) la détermination de premières positions d'alignement entre une pluralité de lames de coupe (13 ; 130 ; 230) et une pluralité de lames d'incision (12 ; 120 ; 220 ; 320) ;
(s3) la mémorisation desdites premières positions d'alignement ;
(s4) la détermination, au moyen de calculs de comparaison, en fonction desdites premières positions d'alignement, d'au moins une deuxième position d'alignement entre l'une de la pluralité de lames de coupe (13 ; 130 ; 230) et l'une de la pluralité de lames d'incision (12 ; 120 ; 220 ; 320) qui n'ont jamais été précédemment alignées entre elles ; et
(s5) l'instruction et l'exécution dudit au moins un deuxième alignement entre l'une de la pluralité de lames de coupe (13 ; 130 ; 230) et l'une de la pluralité de lames d'incision (12 ; 120 ; 220 ; 320) conformément à l'étape (s4) précédente.

2. Procédé d'actionnement selon la revendication 1, **caractérisé en ce que**, pour déterminer ladite au moins une deuxième position d'alignement conformément à l'étape (s4) de la revendication 1, au moins une donnée de caractérisation concernant ladite pluralité de lames de coupe (13 ; 130 ; 230) et/ou ladite pluralité de lames d'incision (12 ; 120 ; 220 ; 320) est en outre utilisée.

3. Procédé d'actionnement selon l'une quelconque des revendications précédentes, **caractérisé par** l'entrée dans l'unité électronique (NC) d'une ou plusieurs profondeurs d'incision prédéterminée (SI) lorsqu'une unité d'incision de lame unique avec une unité d'incision de dent droite ou de lame fendue (320) sont utilisées.

4. Procédé d'actionnement selon l'une quelconque des revendications précédentes, **caractérisé en ce qu'**il suffit d'aligner une nouvelle lame d'incision (12 ; 120 ; 220 ; 320) une seule fois avec une lame de coupe (13 ; 130 ; 230) déjà alignée, ou une nouvelle lame de coupe (13 ; 130 ; 230) une seule fois avec une lame d'incision (12 ; 120 ; 220 ; 320) déjà alignée, pour exécuter des alignements automatiques entre toutes les lames de coupe (13 ; 130 ; 230) et toutes les lames d'incision (12 ; 120 ; 220 ; 320).

5. Procédé d'actionnement selon l'une quelconque des revendications précédentes, **caractérisé en ce qu'**un signal d'avertissement est généré pour déterminer des premières positions d'alignement pour une lame de coupe ou pour une lame d'incision dans le cas où l'une de ladite pluralité de lames de coupe (13 ; 130 ; 230) ou l'une de ladite pluralité de lames d'incision (12 ; 120 ; 220 ; 320) à utiliser sur une machine n'a jamais été précédemment utilisée et/ou alignée.

6. Procédé d'actionnement selon l'une quelconque des revendications précédentes, **caractérisé en ce que**, après l'aiguisage d'une lame de coupe (13 ; 130 ; 230) ou d'une lame d'incision (12 ; 120 ; 220 ; 320), de nouvelles premières positions d'alignement pour une lame de coupe (13 ; 130 ; 230) ou pour une lame d'incision (12 ; 120 ; 220 ; 320) avec des outils connus respectifs sont exécutées afin que le système effectue un auto-apprentissage de la différence de l'épaisseur de dent des outils et/ou du diamètre de la lame d'incision après l'aiguisage et afin de tenir compte de cette valeur/ces valeurs dans des calculs pour déterminer des deuxièmes positions d'alignement après l'aiguisage d'outils.

7. Procédé d'actionnement selon l'une quelconque des revendications 1 à 5, **caractérisé en ce qu'**il est possible d'affecter une réduction moyenne de l'épaisseur de dent de chaque outil unique et/ou du diamètre de la lame d'incision pour chaque opération d'aiguisage unique et de calculer automatiquement des deuxièmes positions d'alignement entre l'une de la pluralité de lames de coupe (13 ; 130 ; 230) et l'une de la pluralité de lames d'incision (12 ; 120 ; 220 ; 320) en tenant compte de ladite réduction moyenne de l'épaisseur de dent de chaque outil unique et/ou également de ladite réduction moyenne du diamètre de lame d'incision.

8. Procédé d'actionnement selon l'une quelconque des revendications précédentes, **caractérisé en ce qu'**il met en oeuvre des déplacements automatiques et motorisés pour l'ajustement de l'unité de lame d'incision.

9. Machine de coupe pour des panneaux ou des éléments similaires, la machine de coupe comprenant au moins une unité de coupe comprenant au moins une lame de coupe et une lame d'incision ; ladite unité de coupe comprenant au moins un dispositif pour permettre l'alignement entre ladite lame de coupe et ladite lame d'incision ; la machine de coupe étant **caractérisée en ce qu'**elle comprend une unité électronique (NC) programmée de manière à mettre en oeuvre le procédé d'actionnement selon l'une quelconque des revendications 1 à 8.
